# FASCICULE DE BREVET EUROPEEN

(11) **EP 3 200 386 B1**
(45) Date de publication et mention de la délivrance du brevet: **09.10.2019**
(21) Numéro de dépôt: 17152324.4
(22) Date de dépôt: 20.01.2017
(51) Int. Cl.: H04L 9/06

(54) **MÉTHODE DE CHIFFREMENT D'UN FLOT D'INSTRUCTIONS ET EXÉCUTION D'UN FLOT D'INSTRUCTIONS AINSI CHIFFRÉ**
VERFARHREN ZUR VERSCHLÜSSELUNG EINES BEFEHLSSTROMS UND ZUR AUSFÜHRUNG EINES DERART VERSCHLÜSSELTEN BEFEHLSSTROMES
METHOD OF ENCRYPTING A STREAM OF INSTRUCTIONS AND EXECUTING A STREAM OF INSTRUCTIONS THUSLY ENCRYPTED

(30) Priorité: 26.01.2016 FR 1650606
(43) Date de publication de la demande: 02.08.2017
(73) Titulaire: Commissariat à l'Energie Atomique et aux Energies Alternatives, 75015 Paris (FR)
(72) Inventeur: PEBAY-PEYROULA, Florian, 38250 ST-NIZIER-DU-MOUCHEROTTE (FR); SAVRY, Olivier, 38360 SASSENAGE (FR); HISCOCK, Thomas, 38000 GRENOBLE (FR)
(74) Mandataire: Brevalex

(56) Documents cités:
- US-A- 4 562 305
- US-A- 5 438 622
- US-A1- 2010 153 745
- SUNGKYU CHO ET AL: "Secure and Efficient Code Encryption Scheme Based on Indexed Table", ETRI JOURNAL, vol. 33, no. 1, 7 février 2011 (2011-02-07), pages 60-70, XP055314927, KR ISSN: 1225-6463, DOI: 10.4218/etrij.11.0110.0056

## Description

### DOMAINE TECHNIQUE

L'objet de la présente invention concerne le domaine du chiffrement des logiciels et de l'exécution de logiciels ainsi chiffrés.

### ÉTAT DE LA TECHNIQUE ANTÉRIEURE

Les exigences croissantes de sécurité, notamment dans des contextes de virtualisation, conduisent à envisager le chiffrement d'un logiciel avant son exécution par une machine réelle ou virtuelle.

Le chiffrement des instructions destinées à être exécutées par un microcontrôleur peut être réalisé de différentes manières :
Dans un premier type d'implémentation dit « offline » le logiciel est entièrement chiffré de manière préalable et transmis au microcontrôleur. Le logiciel est déchiffré par le microcontrôleur ou par un processeur dédié avant d'être stocké, en clair, dans une mémoire de masse. Le microcontrôleur exécute ensuite les instructions du logiciel en clair, lues dans cette mémoire.
Dans un second type d'implémentation dit « au boot », le logiciel est stocké sous forme chiffrée dans une mémoire de masse, par exemple une mémoire flash. Lors du boot, le microcontrôleur, ou un processeur dédié, déchiffre le logiciel et le stocke en clair dans une RAM. Le microcontrôleur exécute ensuite les instructions en clair lues de la RAM.
Dans un troisième type d'implémentation dit « à la volée », le logiciel est chiffré par blocs, chaque bloc étant transmis au microcontrôleur. Celui-ci déchiffre le bloc reçu, à la volée, et le stocke dans une mémoire cache avant de l'exécuter. Toutefois, ce type d'implémentation peut difficilement être retenu dès lors qu'un bloc contient une instruction de saut conditionnel à une instruction n'appartenant au même bloc, en raison de la perte du contexte de chiffrement.

Le document US-B-6345359 décrit une méthode de chiffrement d'un flot d'instructions par masque jetable. Le chiffrement est réalisé instruction par instruction, le masque étant généré à partir d'une clé de chiffrement et de l'adresse à laquelle l'instruction est stockée. Le masque est donc jeté à chaque nouvelle instruction.

Le déchiffrement se fait, à la volée, instruction par instruction à partir de la clé de chiffrement et de l'adresse à laquelle l'instruction est stockée. Le fait que le chiffrement se fasse instruction par instruction en utilisant l'adresse de stockage permet au microcontrôleur de synchroniser sa clé, y compris lors d'un saut en cours d'exécution du programme.

Toutefois, cette méthode de chiffrement d'un logiciel et d'exécution à la volée suppose que l'on connaisse l'adresse physique de chaque instruction, tant lors du chiffrement que lors du déchiffrement. En particulier, il ne sera pas possible d'exécuter le logiciel s'il a été copié à un autre emplacement mémoire ou simplement s'il a été chargé dans une mémoire tampon. Autrement dit, le chiffrement du logiciel doit être répété à chaque fois qu'il est installé ou copié. Il ne sera pas davantage possible de faire exécuter le flot d'instructions ainsi chiffré par une machine virtuelle.

Le document US-B-4562305 décrit une méthode d'exécution à la volée d'un logiciel chiffré au moyen d'un flux de clé initialisé à chaque instruction de branchement à l'aide d'un vecteur d'initialisation stocké dans une table en clair.

Le but de la présente invention est par conséquent de proposer une méthode de chiffrement d'un flot d'instructions qui permette une exécution à la volée, instruction par instruction, sans qu'il soit nécessaire de connaître les adresses physiques de ces instructions. Un autre but de la présente invention est de proposer une méthode d'exécution d'un flot d'instructions chiffré par une telle méthode de chiffrement.

### EXPOSÉ DE L'INVENTION

La présente invention est définie par une méthode de chiffrement d'un flux d'instructions d'un programme selon la revendication 1. Des modes de réalisation avantageux sont précisés dans les revendications dépendantes.

### BRÈVE DESCRIPTION DES DESSINS

D'autres caractéristiques et avantages de l'invention apparaîtront à la lecture d'un mode de réalisation préférentiel de l'invention, en faisant référence aux figures jointes parmi lesquelles :
Les Fig. 1A et 1B représentent schématiquement le principe d'une méthode de chiffrement et de déchiffrement par flot ;
La Fig. 2 représente un exemple d'application d'une méthode de chiffrement par flot d'une séquence d'instructions ;
La Fig. 3 représente un exemple d'une séquence d'instructions, comportant une instruction de saut conditionnel et une instruction de saut inconditionnel;
La Fig. 4A représente la séquence d'instructions de la Fig. 3, chiffrée par une méthode de chiffrement selon un premier mode de réalisation de l'invention ;
La Fig. 4B représente la séquence d'instructions de la Fig. 3, chiffrée par une méthode de chiffrement selon un second mode de réalisation de l'invention ;
La Fig. 5 représente un ordinogramme de la méthode de chiffrement d'un flot d'instructions selon le premier mode de réalisation de l'invention ;
La Fig. 6 représente un ordinogramme de la méthode de chiffrement d'un flot d'instructions selon le second mode de réalisation de l'invention ;
La Fig. 7 représente un ordinogramme de la méthode d'exécution d'un flot d'instructions chiffrées par la méthode de chiffrement de la Fig. 5 ;
La Fig. 8 représente un ordinogramme de la méthode d'exécution d'un flot d'instructions chiffrées par la méthode de chiffrement de la Fig. 6.

### EXPOSÉ DÉTAILLÉ DE MODES DE RÉALISATION PARTICULIERS

Nous considérerons dans la suite un flot d'instructions susceptibles d'être exécutées par un processeur (CPU ou microcontrôleur). Ce flot d'instructions se présente sous la forme d'un fichier binaire généré au moyen d'un compilateur à partir d'un programme source en assembleur ou de niveau supérieur. Chaque instruction est représentée par un code binaire qui obéit à un format d'instruction et présente une taille fixe. Une instruction est généralement définie par une opération à réaliser (opération logique et arithmétique par exemple) et, le cas échéant, un opérande source et un opérande de destination. Les opérandes peuvent être définis par des registres internes ou des emplacements mémoire.

Normalement, les instructions sont exécutées séquentiellement par le processeur, le pointeur d'instruction fournissant l'adresse de la prochaine instruction à exécuter étant simplement incrémenté par la taille de l'instruction. Les instructions sont lues par le séquenceur à l'adresse fournie par le pointeur d'instruction et présentées à l'unité arithmétique et logique (ALU) du processeur qui les interprète.

Toutefois, en présence d'instructions de contrôle (saut conditionnel ou inconditionnel, boucle, etc.), il est dérogé à la règle d'exécution séquentielle, l'adresse présente dans le pointeur d'instruction étant alors modifiée par l'instruction de contrôle.

Une première idée à la base de l'invention est d'utiliser un chiffrement par flot (*stream cipher*) pour chiffrer le flot d'instructions, les instructions étant sous forme de code binaire.

On rappelle qu'un chiffrement par flot repose sur le principe du code de Vernam ou masque jetable. Chaque bit est chiffré individuellement par addition (opération XOR) bit à bit du message en clair avec le masque en question. En pratique, les méthodes de chiffrement par flot font appel à la génération d'une séquence pseudo-aléatoire à partir d'une combinaison linéaire ou non-linéaire de sorties de registres à décalage, rebouclés sur eux-mêmes et/ou entre eux. La séquence pseudo-aléatoire générée, dénommée aussi flux de clé (*keystream*) constitue le masque jetable.

La plupart des méthodes récentes de chiffrement par flot utilisent d'une part une clé secrète, comme dans n'importe quel cryptosystème symétrique, notée *K*, et un vecteur d'initialisation *IV,* prenant une nouvelle valeur à chaque session de chiffrement encore dénommée quelquefois valeur de circonstance ou *nonce* (*number used once*)*.* A la différence de la clé de chiffrement, le vecteur d'initialisation est public. Il sert essentiellement à randomiser le flux de clé d'une session de chiffrement à l'autre.

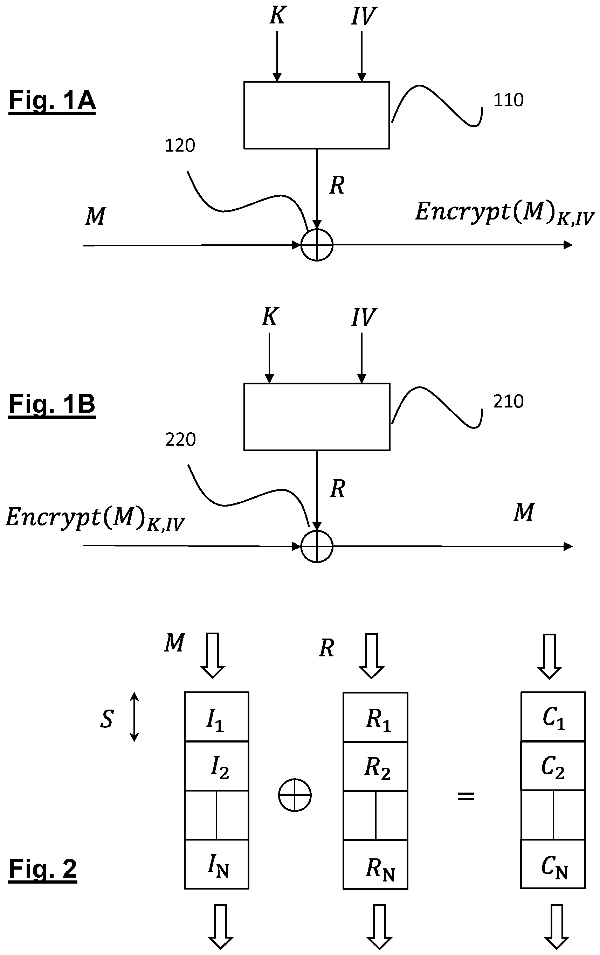

La Fig. 1A représente de manière schématique le principe d'une méthode de chiffrement par flot.

Le flux binaire en clair (constitué par exemple par le fichier binaire du programme, c'est-à-dire les codes binaires des instructions successives de ce programme), est représenté par *M*. Un générateur de séquence pseudo-aléatoire, 110, reçoit la clé secrète, *K* et le vecteur d'initialisation, *IV* et fournit la séquence pseudo-aléatoire, R. Celle-ci est ajoutée bit à bit en 120 (XOR) au flux binaire en clair. Le flux ainsi chiffré est noté *Encrypt*(*M*)*_{K,IV}* = *M* ⊕ *R*.

De manière similaire, la Fig. 1B représente le principe du déchiffrement d'un flux binaire chiffré avec la méthode de chiffrement par flot de la Fig. 1A.

Le déchiffrement fait appel à un générateur de séquence pseudo-aléatoire 210, identique à celui ayant servi au chiffrement, 110. Le générateur de séquence pseudo-aléatoire 210 reçoit la même clé de chiffrement, *K* et est initialisé par le même vecteur d'initialisation, *IV.* Le flux binaire chiffré est sommé bit à bit en 220 avec la séquence pseudo aléatoire *R* pour redonner le flux binaire en clair.

Un exemple de méthode de chiffrement par flot est Trivium dont on pourra trouver une description dans l'article de Y. Tian et al. intitulé « On the design of Trivium », publié dans IACR Cryptology ePrint Archive, 2009. D'autres méthodes de chiffrement par flot peuvent alternativement être utilisées, telles que les méthodes Grain, Mickey voire l'algorithme plus ancien RC4.

La Fig. 2 représente un exemple de chiffrement par flot d'une séquence d'instructions.

Les instructions sous forme de code binaire sont notées ici *I*₁,...,*I_{N}* et sont de taille *S.* Le flux binaire à chiffrer est constitué par la séquence *M* = *I*_{1,}...,*I_{N}*. La séquence en sortie du générateur pseudo-aléatoire est découpée en mots successifs de taille *S*, *R*₁,..,*R_{N}*, autrement dit le flux binaire chiffré n'est autre que la série d'instructions chiffrées *Cᵢ* = *Rᵢ* ⊕ *Iᵢ, i* = 1,..,*N*. Les mots successifs *R*₁,..,*R_{N}* sont obtenus au cours d'une même session de chiffrement, c'est-à-dire pour un même vecteur d'initialisation.

Lors du déchiffrement, de manière symétrique, la même séquence pseudo-aléatoire est générée à partir de la clé *K* et du vecteur d'initialisation *IV* et découpée en mots successifs *R*₁,..,*R_{N}*. Ces mots sont respectivement sommés, bit à bit, aux instructions chiffrées *C*₁,...*,C_{N}* pour redonner les instructions en clair *I*₁...,*I_{N}.*

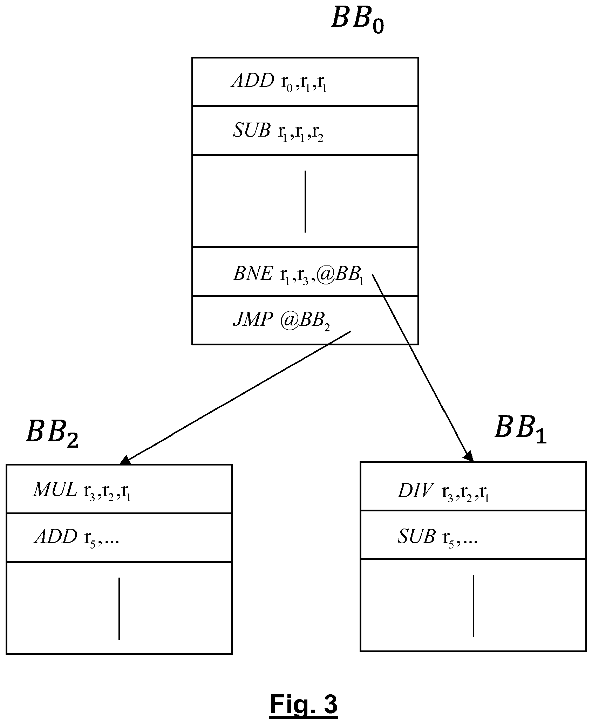

Comme indiqué dans la partie introductive, durant le déroulement d'un programme, le pointeur d'instruction peut arriver sur une instruction de contrôle, par exemple sur une instruction de saut inconditionnel (dite aussi de branchement inconditionnel) ou de saut conditionnel (dite aussi de branchement conditionnel). Une telle situation est illustrée dans l'exemple de la Fig. 3. Le programme comprend un premier bloc d'instructions (représentées pour plus de lisibilité en assembleur), *BB*₀ dont les dernières instructions sont *BNE r*₁,*r*₃,@*BB*₁ et *JMP*@*BB*₂*.* Autrement dit si les contenus des registres *r*₁ et *r*₃ sont différents, le pointeur d'instruction saute à l'adresse @ *BB*₁ d'un second bloc, *BB*_{1,} et à défaut saute à l'adresse @*BB*₂, d'un troisième bloc *BB*₂. On comprend que les blocs *BB*₁ et *BB*₂ ne respectent pas la continuité du séquencement et ne peuvent donc être déchiffrés tels quels.

La seconde idée à la base de l'invention consiste à insérer lors du chiffrement du flux d'instructions, une instruction spécifique située juste avant l'instruction de branchement ou bien à l'adresse de branchement, ayant pour argument un vecteur d'initialisation et indiquant au générateur de séquence pseudo-aléatoire de charger le vecteur d'initialisation en question.

Il est à noter que les boucles itératives sont considérées comme la répétition d'une séquence d'instructions avec un branchement conditionnel. Elles relèvent également par conséquent de la méthode de chiffrement selon la présente invention.

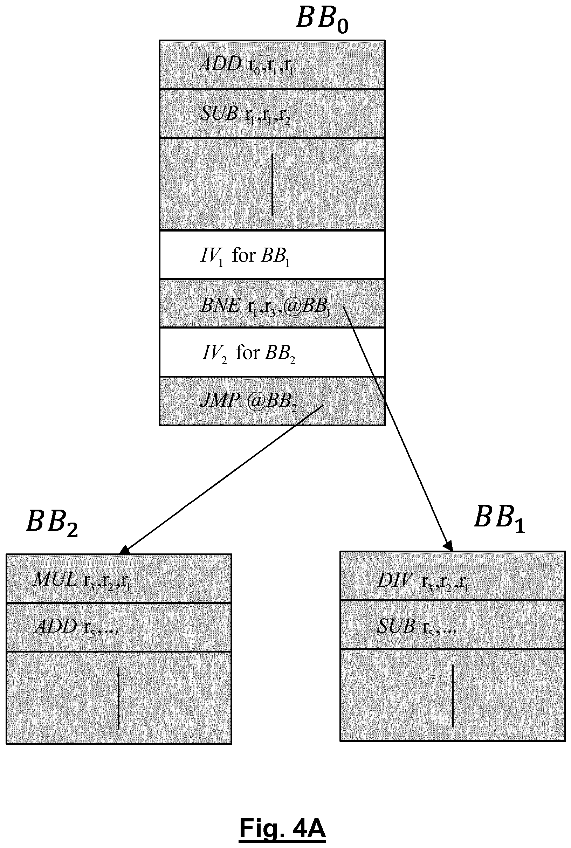

La Fig. 4A représente la séquence d'instructions de la Fig. 3, chiffrée par une méthode de chiffrement selon un premier mode de réalisation de l'invention.

Dans ce premier mode de réalisation, l'instruction spécifique de chargement de vecteur d'initialisation est insérée juste avant l'instruction de branchement.

On a représenté en grisé les instructions chiffrées par la méthode de chiffrement par flot. Juste avant l'instruction de branchement conditionnel *BNE r*₁,*r*₃,@*BB*₁ a été insérée une instruction d'initialisation *IV*₁ for *BB*₁, cette instruction indiquant que le vecteur d'initialisation *IV*₁ est à charger dans le générateur de séquence pseudo-aléatoire pour le déchiffrement et l'exécution à la volée du bloc *BB*₁, si les conditions du branchement conditionnel sont remplies. De manière similaire, une instruction d'initialisation *IV*₂ for *BB*₂ a été insérée juste avant l'instruction de branchement inconditionnel, *JMP* @*BB*₂. L'instruction insérée indique que le vecteur d'initialisation *IV*₂ est à charger dans le générateur de séquence pseudo-aléatoire pour le déchiffrement et l'exécution à la volée du bloc *BB*₂.

Les instructions *IV*₁ for *BB*₁ et *IV*₂ for *BB*₂ peuvent être chiffrées comme le reste du bloc *BB*₀ (au moyen de la méthode de chiffrement par flot, avec la clé *K* et le vecteur d'initialisation *IV*₀). Alternativement, les instructions d'initialisation peuvent figurer en clair dans le bloc comme représenté sur la Fig. 4A. Dans le premier cas, l'instruction d'initialisation doit d'abord être déchiffrée avant de réinitialiser le générateur de séquence pseudo-aléatoire, dans le second cas l'instruction en clair comprend un préfixe de contrôle indiquant qu'elle ne doit pas être déchiffrée mais directement utilisée pour contrôler le générateur pseudo-aléatoire.

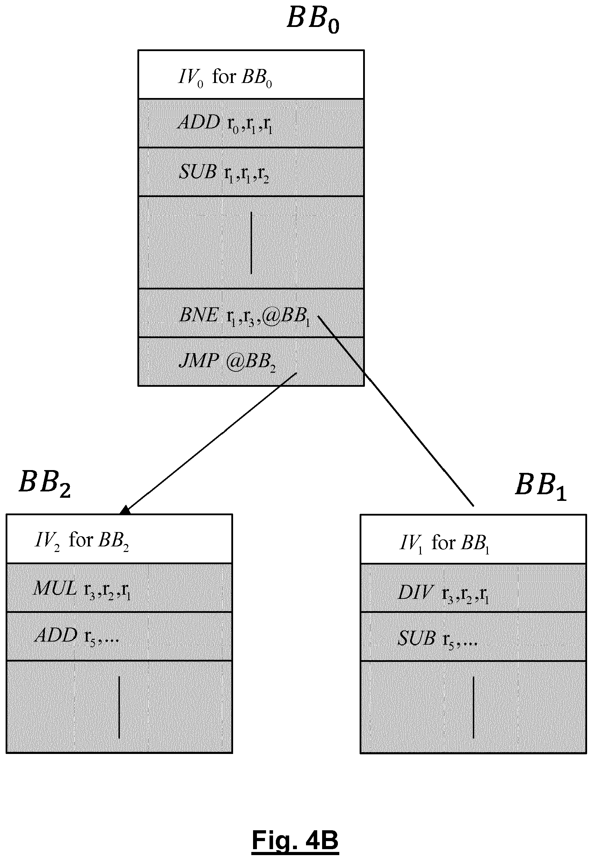

La Fig. 4B représente la séquence d'instructions de la Fig. 3, chiffrée par une méthode de chiffrement selon un second mode de réalisation de l'invention.

Dans ce second mode de réalisation, une instruction d'initialisation figure en tête de chaque bloc d'instructions, à l'adresse de branchement. Ainsi, les instructions *IV*₀ for *BB*₀, *IV*₁ for *BB*₁ et *IV*₂ for *BB*₂ sont respectivement placées en tête des blocs d'instructions *BB*₀,*BB*₁,*BB*₂. Ces instructions d'initialisation demeurent en clair dans le flux binaire chiffré: elles contiennent de préférence un préfixe de contrôle indiquant qu'elles ne doivent pas être déchiffrées mais au contraire prises en compte pour initialiser le générateur de séquence pseudo-aléatoire. Ainsi, lorsque le pointeur d'instruction arrive sur le début du bloc *BB*₀, le générateur pseudo-aléatoire est initialisé avec le vecteur d'initialisation *IV*₀, les instructions du bloc sont déchiffrées (à l'aide de la séquence pseudo-aléatoire ainsi générée) et exécutées à la volée par l'ALU du processeur. De la même façon, lorsque le pointeur d'instruction arrive sur le début du bloc *BB*₁ (lorsque les conditions du branchement conditionnel sont remplies) ou sur le début du bloc *BB*₂ (en raison de l'instruction de saut inconditionnel), le générateur de séquence pseudo-aléatoire est (ré)-initialisé avec le vecteur d'initialisation *IV*₁, respectivement *IV*₂. On s'assure ainsi que la séquence pseudo-aléatoire permettant le déchiffrement est bien celle qui a servi à chiffrer le bloc.

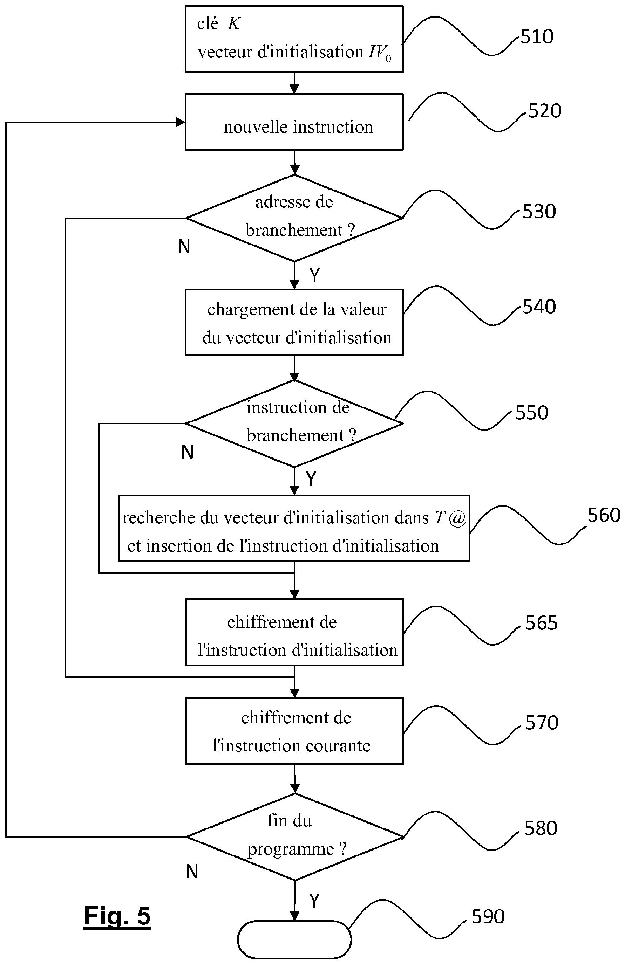

La Fig. 5 représente un ordinogramme de la méthode de chiffrement d'un flux d'instructions selon le premier mode de réalisation de l'invention.

Cette méthode de chiffrement est mise en oeuvre par un compilateur, capable par définition de traduire les instructions en assembleur en instructions en langage machine (code binaire). Le compilateur est notamment à même d'identifier les instructions de saut, conditionnel ou non, dans le programme en assembleur, ainsi que les adresses de branchement. Les adresses de branchement sont stockées dans une table *T* @ et à chaque adresse de branchement est associée dans la table une valeur spécifique de vecteur d'initialisation. Les adresses de branchement sont des adresses relatives (numéros d'instructions) et non des adresses physiques. Les valeurs de vecteur d'initialisation peuvent résulter d'un tirage aléatoire ou de la sortie d'un compteur, incrémenté à chaque nouvelle adresse de branchement.

Le flux d'instructions en assembleur est fourni, instruction par instruction, à la méthode de chiffrement par flot. Celle-ci est initialisée en 510 au moyen d'une clé de chiffrement *K* et d'une valeur *IV*₀ du vecteur d'initialisation du générateur de séquence pseudo-aléatoire.

A l'étape 520, on prend en compte une nouvelle instruction. On détermine en 530 à partir de la table *T* @ si l'adresse de l'instruction courante est une adresse de branchement ou non.

Si c'est le cas, on charge en 540 le générateur de séquence pseudo-aléatoire avec la valeur de vecteur d'initialisation correspondant à cette adresse. Dans le cas contraire, on poursuit en 570 sans modifier le vecteur d'initialisation.

A l'étape 550, on détermine si l'instruction courante est une instruction de branchement (conditionnel ou non).

Si ce n'est pas une instruction de branchement, on passe directement à l'étape 565.

En revanche, si l'instruction courante est une instruction de branchement, on recherche en 560 dans la table *T* @ la valeur de vecteur d'initialisation correspondant à l'adresse de branchement. On note *IVᵢ* cette valeur. On insère ensuite une instruction d'initialisation du générateur de séquence pseudo-aléatoire à la valeur *IVᵢ* avant l'instruction courante.

Dans une première variante où on laisse l'instruction d'initialisation en clair, on passe directement à l'étape 570. A défaut, dans une seconde variante représentée ici, on chiffre en 565 l'instruction d'initialisation avec le chiffrement par flot sur la base de la valeur courante du vecteur d'initialisation.

A l'étape 570, on chiffre l'instruction courante avec l'algorithme de chiffrement par flot. Pour ce faire, l'instruction est d'abord traduite en code binaire par le compilateur puis le code binaire est chiffré par la séquence pseudo-aléatoire sur la base de la valeur courante du vecteur d'initialisation.

A l'étape 580, on détermine si l'on a atteint la fin du programme. Dans la négative, on retourne en 520 pour traiter la nouvelle instruction courante. Dans l'affirmative, la méthode de chiffrement du flot d'instructions se termine en 590.

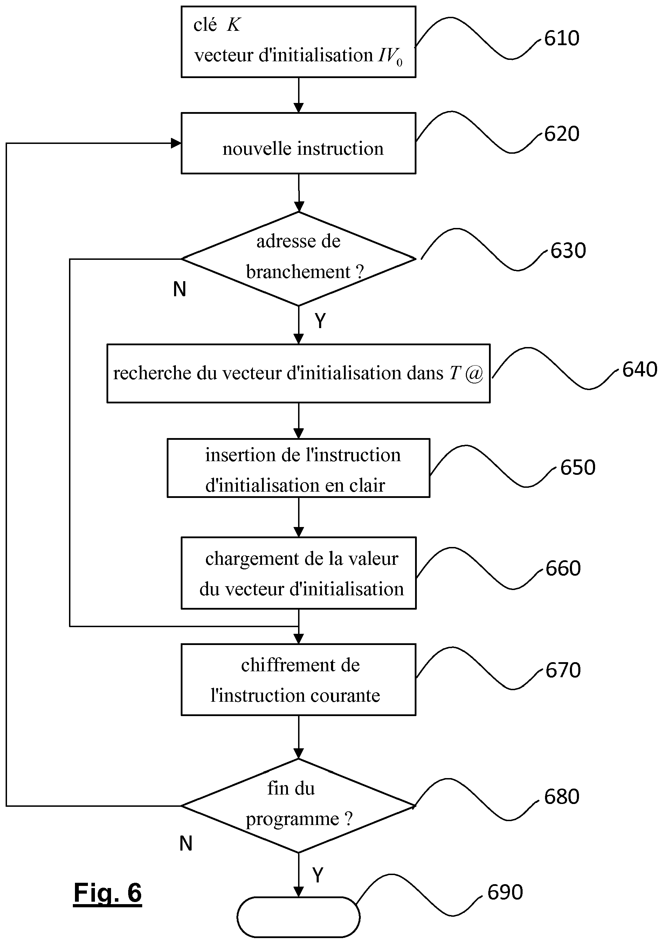

La Fig. 6 représente un ordinogramme de la méthode de chiffrement d'un flot d'instructions selon le second mode de réalisation de l'invention.

Comme dans le premier mode de réalisation, la méthode de chiffrement est mise en oeuvre par un compilateur. Celui-ci connaît les adresses de branchement des différents blocs du programme. Ces adresses de branchement sont répertoriées dans une table *T* @. On suppose que l'on a généré pour chaque adresse de branchement un vecteur d'initialisation correspondant et que ce vecteur d'initialisation est stocké dans la table en relation avec l'adresse de branchement correspondante.

Le flux d'instructions en assembleur est fourni, instruction par instruction, à la méthode de chiffrement par flot.

A l'étape 610 on initialise le générateur de séquence pseudo-aléatoire au moyen de la clé de chiffrement *K* et de valeur *IV*₀ du vecteur d'initialisation associée au premier bloc.

A l'étape 620, on prend en compte une nouvelle instruction.

On détermine en 630, à partir de la table *T* @, si l'adresse de l'instruction courante est une adresse de branchement ou non.

Si ce n'est pas une adresse de branchement, on passe directement à l'étape 670.

En revanche, si l'instruction courante est une adresse de branchement, on recherche en 640 dans la table *T* @ la valeur d'initialisation *IVᵢ* correspondant à cette adresse de branchement.

En 650, une instruction d'initialisation du générateur de séquence pseudo-aléatoire à la valeur *IVᵢ* est insérée en clair à l'adresse de branchement.

En 660, on met à jour le vecteur d'initialisation du générateur de séquence pseudo-aléatoire avec la nouvelle valeur *IVᵢ.*

A l'étape 670, on chiffre l'instruction courante avec l'algorithme de chiffrement par flot. Pour ce faire, l'instruction est traduite en code binaire par le compilateur puis le code binaire est chiffré par la séquence pseudo-aléatoire de l'algorithme de chiffrement par flot.

A l'étape 680, on détermine si l'on a atteint la fin du programme. Dans la négative, on retourne en 620 pour traiter la nouvelle instruction courante. Dans l'affirmative, la méthode de chiffrement du flot d'instructions se termine en 690.

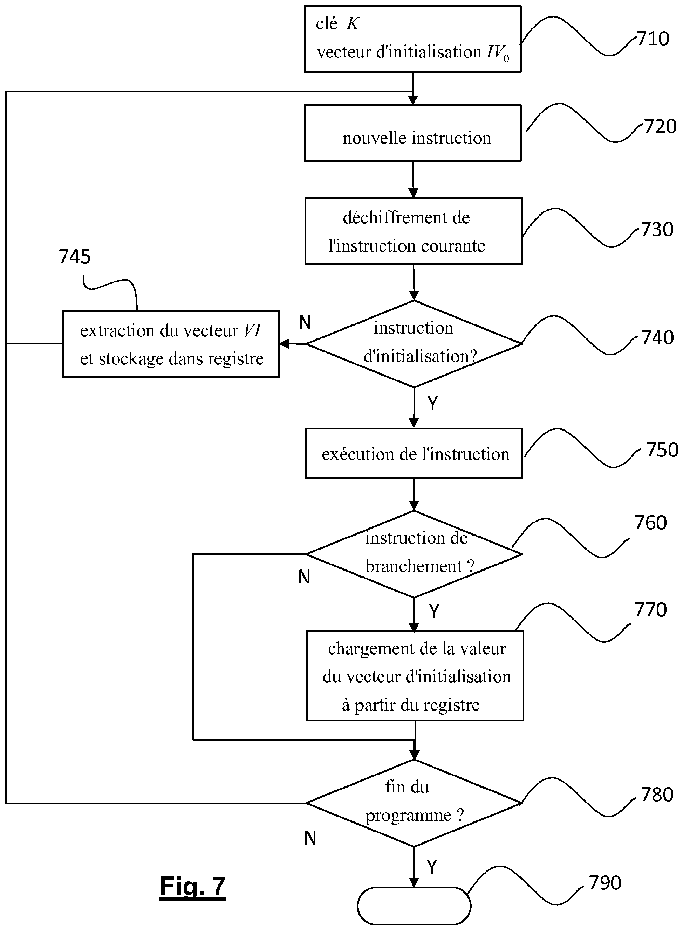

La Fig. 7 représente un ordinogramme de la méthode d'exécution d'un flot d'instructions chiffrées par la méthode de chiffrement de la Fig. 5.

En 710, on initialise le générateur de séquence pseudo-aléatoire au moyen de la clé secrète *K* ayant servi au chiffrement et du vecteur d'initialisation initial *IV*₀.

En 720, on recherche (opération FETCH) une nouvelle instruction dans la mémoire.

En 730, on déchiffre l'instruction au moyen de la séquence pseudo-aléatoire et l'on détermine en 740 si l'instruction ainsi déchiffrée est une instruction d'initialisation du générateur de séquence pseudo-aléatoire. Dans l'affirmative on extrait la nouvelle valeur du vecteur d'initialisation et on la stocke dans un registre, en 745, puis on retourne à l'étape 720. Dans la négative, on poursuit en 750.

Alternativement, on détermine si l'instruction est en clair (cas de la première variante) et, dans ce cas, on extrait directement la nouvelle valeur du vecteur d'initialisation, on la stocke dans le registre en question avant de retourner à l'étape 720.

En 750, l'ALU exécute l'instruction précédemment déchiffrée. On vérifie en 760 si l'instruction est une instruction de branchement inconditionnel ou bien une instruction de branchement conditionnel dont la condition est satisfaite. Si c'est le cas, on charge en 770 la valeur du registre comme nouveau vecteur d'initialisation du générateur de séquence pseudo-aléatoire. A défaut, on continue en 780.

En 780, on vérifie si on a atteint une instruction de fin. Dans l'affirmative, l'exécution s'arrête en 790. Sinon, l'exécution se poursuit par la recherche d'une nouvelle instruction en 720.

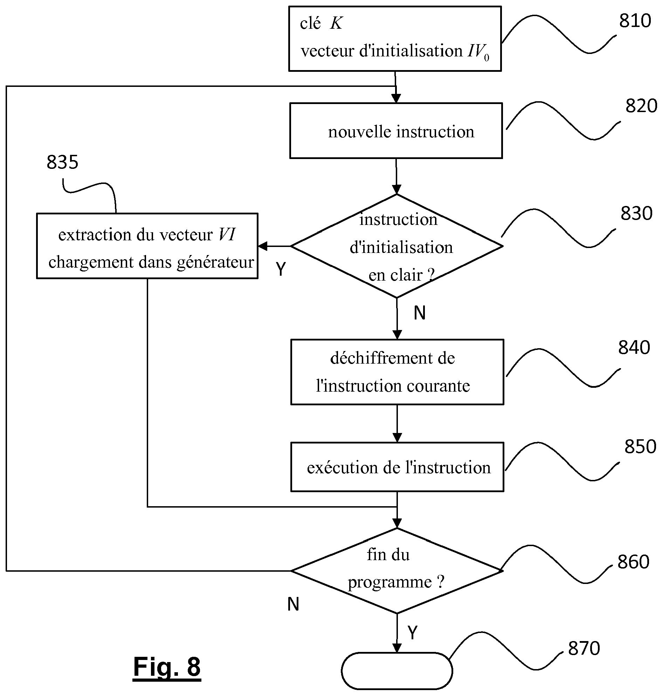

La Fig. 8 représente un ordinogramme de la méthode d'exécution d'un flot d'instructions chiffrées par la méthode de chiffrement de la Fig. 6.

En 810, on initialise le générateur de séquence pseudo-aléatoire au moyen de la clé secrète *K* ayant servi au chiffrement et du vecteur d'initialisation initial *IV*₀.

En 820, on recherche (opération FETCH) une nouvelle instruction dans la mémoire.

A l'étape 830, on détermine si l'instruction est une instruction (en clair) d'initialisation du générateur de séquence pseudo-aléatoire.

Dans l'affirmative, en 835, on extrait la nouvelle valeur du vecteur d'initialisation et on la charge dans le générateur de séquence pseudo-aléatoire. On poursuit ensuite à l'étape 860.

Dans la négative, on déchiffre en 840 l'instruction courante au moyen de la séquence pseudo-aléatoire.

L'ALU exécute en 850 l'instruction précédemment déchiffrée.

En 860, on vérifie si on a atteint une instruction de fin. Dans l'affirmative, l'exécution s'arrête en 870. Sinon, l'exécution se poursuit par la recherche d'une nouvelle instruction en 820.

L'homme du métier comprendra que, quel que soit le mode de réalisation envisagé, un branchement conditionnel ou inconditionnel est associé à une valeur du vecteur d'initialisation lors du chiffrement du flux d'instructions. Cette valeur sert à initialiser le générateur de séquence pseudo-aléatoire pour le chiffrement du bloc d'instructions correspondant à l'adresse de branchement. Lors de l'exécution du flux d'instructions, le vecteur d'initialisation correspondant à ce bloc est utilisé pour son déchiffrement. Ainsi, il n'est pas nécessaire de faire référence à une adresse physique lors du chiffrement ou du déchiffrement d'une instruction du programme.

Dans la description précédente, il a été supposé que le flux d'instructions à chiffrer se présentait sous la forme d'un fichier binaire généré par un compilateur. Ce compilateur est traditionnellement statique, autrement dit le code machine est produit une fois pour toutes par le compilateur avant l'exécution, à partir d'un programme en langage source et ce code machine est stocké dans la mémoire du processeur. Selon une variante, le compilateur peut être dynamique, autrement dit certaines parties du code peuvent être générées directement lors de l'exécution du programme. Les parties du code en question sont générées par un générateur de code dédié, encore appelé compilette ou générateur de code polymorphique, stocké dans la mémoire morte du processeur en lieu et place du code machine lui-même. Cette compilette est pilotée par une source d'aléa (nombre aléatoire ou pseudo-aléatoire) et permet de produire différentes variantes fonctionnellement équivalentes d'une routine ou d'un composant logiciel, dénommées instances polymorphiques. L'instance polymorphique n'est pas présente en mémoire avant l'exécution du programme.

On trouvera une description détaillée de l'exécution polymorphique d'un programme dans la demande FR-A-13 59473 incorporée ici par référence.

L'exécution polymorphique du code peut être combinée avec un chiffrement par flot. Autrement dit, les instances polymorphiques peuvent être générées de manière chiffrée. Pour les branchements arrière, c'est-à-dire vers des adresses d'instructions déjà générées, la méthode de chiffrement présentée en relation avec les Figs. 5 et 6 s'applique comme précédemment.

L'exécution polymorphique de code chiffré présente un avantage supplémentaire par rapport à la méthode de chiffrement de code statique présentée précédemment. En effet, un attaquant qui aurait connaissance de la clé de chiffrement ne pourrait directement déchiffrer le code, il devrait en sus pouvoir exécuter le code pour pouvoir le déchiffrer, ce qui est particulièrement ardu en raison même du polymorphisme du code généré.

## Revendications

1. Méthode de chiffrement d'un flux d'instructions d'un programme au moyen d'un chiffrement par flot utilisant un générateur de séquence pseudo-aléatoire paramétré par une clé secrète (*K*) et initialisé par un vecteur d'initialisation (*IV*), **caractérisé en ce que** :
- le flux d'instructions est traduit par un compilateur en un code binaire, ledit code binaire étant sommé bit à bit avec la séquence pseudo-aléatoire, pour fournir un flux d'instructions chiffrées;
- lorsque le programme comporte une instruction de branchement vers une adresse de branchement, on insère dans le programme une instruction d'initialisation correspondante comportant un vecteur d'initialisation spécifique pour initialiser le générateur de séquence pseudo-aléatoire avec ledit vecteur d'initialisation spécifique à l'adresse de branchement, l'instruction d'initialisation étant insérée à une adresse, ladite adresse étant située juste avant l'instruction de branchement ou bien à l'adresse de branchement, les instructions à partir de l'adresse de branchement étant chiffrées au moyen d'une séquence pseudo-aléatoire générée par le générateur pseudo-aléatoire initialisé par ledit vecteur d'initialisation spécifique.

2. Méthode de chiffrement d'un flux d'instructions selon la revendication 1, **caractérisée en ce que** l'instruction d'initialisation est insérée en clair, juste avant l'instruction de branchement, dans le flux d'instructions chiffrées.

3. Méthode de chiffrement d'un flux d'instructions selon la revendication 1, **caractérisée en ce que** l'instruction d'initialisation est chiffrée avec ladite séquence pseudo-aléatoire avant d'être insérée juste avant l'instruction de branchement, dans le flux d'instructions chiffrées.

4. Méthode de chiffrement d'un flux d'instructions selon la revendication 1, **caractérisée en ce que** l'instruction d'initialisation est insérée en clair à l'adresse de branchement dans le flux d'instructions chiffrées.

5. Méthode d'exécution d'un flux d'instructions d'un programme, chiffré par la méthode de chiffrement selon la revendication 1, **caractérisé en ce que**:
- on génère une séquence pseudo-aléatoire au moyen du générateur de séquence pseudo-aléatoire paramétré par ladite clé secrète et initialisé par ledit vecteur d'initialisation ;
- on somme le flux d'instructions chiffrées bit à bit avec la séquence pseudo-aléatoire, chaque instruction chiffrée étant déchiffrée et exécutée avant de passer à la suivante;
- on détecte chaque instruction d'initialisation dans le flux d'instructions chiffrées et, lorsqu'une telle instruction d'initialisation est détectée, on extrait le vecteur d'initialisation qu'elle contient et on initialise le générateur de séquence pseudo-aléatoire avec le vecteur d'initialisation ainsi extrait en cas de branchement à l'adresse de branchement.

6. Méthode d'exécution d'un flux d'instructions selon la revendication 5, **caractérisée en ce qu'**une instruction d'initialisation est détectée, le cas échéant après déchiffrement, au moyen d'un préfixe spécifique.

7. Méthode d'exécution d'un flux d'instructions selon la revendication 5, **caractérisée en ce que**, dans le cas où une instruction d'initialisation est insérée avant une instruction de branchement à une adresse de branchement, on stocke dans un registre intermédiaire le vecteur d'initialisation extrait de l'instruction d'initialisation lorsque celle-ci est détectée et l'on initialise le générateur pseudo-aléatoire avec le contenu dudit registre lorsque l'on saute à l'adresse de branchement.

8. Méthode d'exécution d'un flux d'instructions selon l'une des revendications 5 à 7, **caractérisée en ce que** le programme comprend au moins une instruction de branchement conditionnel.

9. Méthode d'exécution d'un flux d'instructions selon l'une des revendications 5 à 7, **caractérisée en ce que** le programme comprend au moins une instruction de branchement inconditionnel.

## Patentansprüche

1. Verfahren zum Verschlüsseln von einem Befehlsstrom eines Programms mittels einer stromweisen Verschlüsselung unter Verwendung eines Pseudozufallsfolgengenerators, der mit einem Geheimschlüssel (*K*) parametrisiert ist und durch einen Initialisierungsvektor (*IV*) initialisiert wird, **dadurch gekennzeichnet, dass**
- der Befehlsstrom von einem Compiler in einen Binärcode übersetzt wird, wobei der Binärcode Bit für Bit mit der Pseudozufallsfolge summiert wird, um einen verschlüsselten Befehlsstrom bereitzustellen;
- dann, wenn das Programm einen Verzweigungsbefehl zu einer Verzweigungsadresse enthält, ein entsprechender Initialisierungsbefehl in das Programm eingefügt wird, der einen spezifischen Initialisierungsvektor enthält, um den Pseudozufallsfolgengenerator mit dem der Verzweigungsadresse spezifischen Initialisierungsvektor zu initialisieren, wobei der Initialisierungsbefehl an einer Adresse eingefügt wird, wobei sich die Adresse unmittelbar vor dem Verzweigungsbefehl bzw. an der Verzweigungsadresse befindet, wobei die Befehle ausgehend von der Verzweigungsadresse mittels einer Pseudozufallsfolge verschlüsselt werden, die durch den durch den spezifischen Initialisierungsvektor initialisierten Pseudozufallsgenerator erzeugt wird.

2. Verfahren zum Verschlüsseln von einem Befehlsstrom nach Anspruch 1, **dadurch gekennzeichnet, dass** der Initialisierungsbefehl unmittelbar vor dem Verzweigungsbefehl im Klartext in den verschlüsselten Befehlsstrom eingefügt wird.

3. Verfahren zum Verschlüsseln von einem Befehlsstrom nach Anspruch 1, **dadurch gekennzeichnet, dass** der Initialisierungsbefehl mit der Pseudozufallsfolge verschlüsselt wird, bevor er unmittelbar vor dem Verzweigungsbefehl in den verschlüsselten Befehlsstrom eingefügt wird.

4. Verfahren zum Verschlüsseln von einem Befehlsstrom nach Anspruch 1, **dadurch gekennzeichnet, dass** der Initialisierungsbefehl im Klartext an der Verzweigungsadresse in den verschlüsselten Befehlsstrom eingefügt wird.

5. Verfahren zum Ausführen von einem Befehlsstrom eines Programms, der mit dem Verschlüsselungsverfahren nach Anspruch 1 verschlüsselt wird, **dadurch gekennzeichnet, dass**
- eine Pseudozufallsfolge mittels des Pseudozufallsfolgengenerators erzeugt wird, der mit dem Geheimschlüssel parametrisiert ist und durch den Initialisierungsvektor initialisiert wird,
- der verschlüsselte Befehlsstrom Bit für Bit mit der Pseudozufallsfolge summiert wird, wobei jeder verschlüsselte Befehl entschlüsselt und ausgeführt wird, bevor zum nächsten übergegangen wird;
- jeder Initialisierungsbefehl in dem verschlüsselten Befehlsstrom erfasst wird und dann, wenn ein solcher Initialisierungsbefehl erfasst ist, der Initialisierungsvektor, den er enthält, extrahiert wird und der Pseudozufallsfolgengenerator mit dem so extrahierten Initialisierungsvektor bei Verzweigung zur Verzweigungsadresse initialisiert wird.

6. Verfahren zum Ausführen von einem Befehlsstrom nach Anspruch 5, **dadurch gekennzeichnet, dass** ein Initialisierungsbefehl gegebenenfalls nach Entschlüsselung mittels eines spezifischen Präfixes erfasst wird.

7. Verfahren zum Ausführen von einem Befehlsstrom nach Anspruch 5, **dadurch gekennzeichnet, dass** für den Fall, dass ein Initialisierungsbefehl vor einem Verzweigungsbefehl an eine Verzweigungsadresse eingefügt ist, der aus dem Initialisierungsbefehl extrahierte Initialisierungsvektor in einem Zwischenregister abgelegt wird, wenn dieser Befehl erfasst wird, und der Pseudozufallsgenerator mit dem Inhalt des Registers beim Sprung auf die Verzweigungsadresse initialisiert wird.

8. Verfahren zum Ausführen von einem Befehlsstrom nach einem der Ansprüche 5 bis 7, **dadurch gekennzeichnet, dass** das Programm zumindest einen bedingten Verzweigungsbefehl enthält.

9. Verfahren zum Ausführen von einem Befehlsstrom nach einem der Ansprüche 5 bis 7, **dadurch gekennzeichnet, dass** das Programm zumindest einen unbedingten Verzweigungsbefehl enthält.

## Claims

1. Method of encryption of a stream of program instructions with a stream cipher using a pseudo-random sequence generator configured by a secret key (*K*) and initialised by an initialisation vector (*IV*), **characterised in that**:
- the stream of instructions is translated into binary code by a compiler, said binary code being summated bit by bit with the pseudo-random sequence to provide an encrypted stream of instructions;
- when the program comprises a branch instruction to a branch address, a corresponding initialisation instruction, comprising a specific initialisation vector, is inserted in the program to initialise the pseudo-random generator with said initialisation vector specific to the branch address, the initialisation instruction being inserted at an address, said address being located just before the branch instruction or at the branch address, the instructions from the branch address being encrypted using a pseudo-random sequence generated by the pseudo-random generator initialised by said specific initialisation vector.

2. Method of encryption of a stream of instructions according to claim 1, **characterised in that** the initialisation instruction is inserted unencrypted, just before the branch instruction, in the stream of encrypted instructions.

3. Method of encryption of a stream of instructions according to claim 1, **characterised in that** the initialisation instruction is encrypted with said pseudo-random sequence before being inserted just before the branch instruction, in the stream of encrypted instructions.

4. Method of encryption of a stream of instructions according to claim 1, **characterised in that** the initialisation instruction is inserted unencrypted at the branch address in the stream of encrypted instructions.

5. Method of execution of a stream of program instructions encrypted by the encryption method according to claim 1, **characterised in that**:
- a pseudo-random sequence is generated using the pseudo-random sequence generator configured by said secret key and initialised by said initialisation vector;
- the encrypted instructions stream is summated bit by bit with the pseudo random sequence, each encrypted instruction being decrypted and executed before going onto the next instruction;
- each initialisation instruction is detected in the stream of encrypted instructions and, when such an initialisation instruction is detected, the initialisation vector contained in it is extracted and the pseudo-random sequence generator is initialised with the initialisation vector thus extracted in the case of a branch to the branch address.

6. Method of executing a stream of instructions according to claim 5, **characterised in that** an initialisation instruction is detected, possibly after decryption, by means of a specific prefix.

7. Method of executing a stream of instructions according to claim 5, **characterised in that**, if an initialisation instruction is inserted before a branch instruction to a branch address, the initialisation vector extracted from the extracted initialisation instruction is stored in an intermediate register when it is detected and the pseudo-random generator is initialised with the content of said register when jumping to the branch address.

8. Method of execution of a stream of instructions according to one of claims 5 to 7, **characterised in that** the program comprises at least one conditional branch instruction.

9. Method of execution of a stream of instructions according to one of claims 5 to 7, **characterised in that** the program comprises at least one unconditional branch instruction.
